# FASCICULE DE BREVET EUROPEEN

(11) **EP 1 214 207 B1**
(45) Date de publication et mention de la délivrance du brevet: **12.11.2003**
(21) Numéro de dépôt: 00958758.5
(22) Date de dépôt: 29.08.2000
(51) Int. Cl.: B60C 23/04

(54) **SYSTEME DE CONTROLE DE LA PRESSION DES PNEUMATIQUES D'UN VEHICULE**
SYSTEM ZUR LUFTDRUCKKONTROLLE VON FAHRZEUGREIFEN
SYSTEM FOR CONTROLLING THE PRESSURE OF A VEHICLE TYRES

(30) Priorité: 03.09.1999 FR 9911074
(43) Date de publication de la demande: 19.06.2002
(73) Titulaire: JOHNSON CONTROLS AUTOMOTIVE ELECTRONICS, 95526 Cergy Pontoise Cédex (FR)
(72) Inventeur: DELAPORTE, Francis, F-95520 Osny (FR)
(74) Mandataire: Bloch, Gérard
(86) Numéro de dépôt international: FR0002397
(87) Numéro de publication internationale: WO01017805

(56) Documents cités:
- EP-A- 0 763 437
- DE-A- 19 518 806
- US-A- 5 602 524

## Description

Un système de contrôle de la pression des pneumatiques d'un véhicule automobile comporte, autour d'un calculateur central équipé d'un récepteur, avec son antenne de réception, des dispositifs de contrôle élémentaires, un par roue, comprenant, chacun, inséré dans la jante, un capteur de pression et un émetteur, avec son antenne d'émission. Chaque dispositif doit émettre régulièrement vers le calculateur central des rafales (bursts) de bits d'informations relatives à la pression du pneumatique associé et il doit en émettre un nombre déterminé d'identiques, généralement cinq, pour qu'un autre nombre déterminé, généralement deux, de ces rafales soit reçu et qu'il soit ainsi considéré que les informations du moment ont bien été émises et reçues. L'émission des rafales peut s'effectuer, pour fixer les idées, toutes les heures, si le véhicule est à l'arrêt, toutes les six minutes, si le véhicule roule.

Le système développé ci-dessus présente l'inconvénient qu'après avoir permuté des roues, le système peut détecter un défaut de pression à une roue qui n'est pas effectivement une roue défaillante. Les rafales de bits d'informations étant en effet "signées" par leurs roues respectives, si, par exemple, on intervertit les deux roues avant et ensuite la pression de la roue gauche chute, le système indiquera que c'est la roue droite, d'origine, devenue la roue gauche, qui est défaillante.

DE 195 18 806 enseigne un système de contrôle radio de la pression de pneumatiques à antennes associées électromagnétiquement aux emplacements des roues respectives, pour les identifier, selon le préambule de la revendication 1.

Cependant, comme les dispositifs émetteurs des roues sont mutuellement indépendants, leurs émissions sont asynchrones et le récepteur central doit pouvoir détecter tout début d'émission pour se synchroniser et recevoir les informations émises.

La présente demande revendique une solution à ce problème.

L'invention concerne ainsi un système de contrôle de la pression des pneumatiques des roues d'un véhicule comportant des dispositifs élémentaires de contrôle de roue, avec, chacun, un capteur de pression et un émetteur, une unité centrale avec un récepteur commun et des moyens d'antenne, comprenant des antennes de réception élémentaires associées respectivement aux emplacements de roue, agencés pour coopérer avec les émetteurs des dispositifs élémentaires de contrôle, système caractérisé par le fait que les moyens d'antenne de réception de l'unité centrale comprennent de surcroît une antenne principale de surveillance de l'ensemble des dispositifs de contrôle de pression et des moyens de commutation du récepteur commun de l'unité centrale de l'antenne principale de surveillance sur chacune des antennes élémentaires d'acquisition.

Ainsi, l'antenne principale de surveillance ayant permis de détecter la défaillance d'un pneumatique, mais indéfini, les antennes élémentaires, l'une d'entre elles, va permettre d'acquérir l'identification du pneumatique concerné. On évite ainsi toute difficulté liée à l'émission asynchrone des dispositifs de roue.

Avantageusement, les dispositifs de contrôle de roue étant agencés pour émettre périodiquement des rafales de bits d'informations, les moyens de commutation sont agencés pour commuter de l'antenne de réception principale sur une antenne de réception élémentaire au cours d'une même période de rafales.

Si, après commutation, le récepteur commun reçoit le reste des rafales, c'est que le pneumatique de roue alors associé à l'antenne élémentaire considérée est bien le pneumatique défaillant. Sinon, on attendra la période de rafales suivante pour commuter sur une autre antenne élémentaire et ainsi de suite jusqu'à ce qu'on ait identifié le pneumatique de roue défaillant.

De façon très avantageuse, les antennes de réception sont des câbles rayonnants.

L'invention sera mieux comprise à l'aide de la description suivante d'une forme de réalisation préférée du système de contrôle de la pression des pneumatiques, en référence au dessin annexé, sur lequel :
- la figure 1 est un schéma par blocs fonctionnels du dispositif de contrôle de pression, et
- la figure 2, formée des figures 2A, 2B, 2C, 2D, 2E et 2F, est un diagramme temporel en illustrant le fonctionnement.

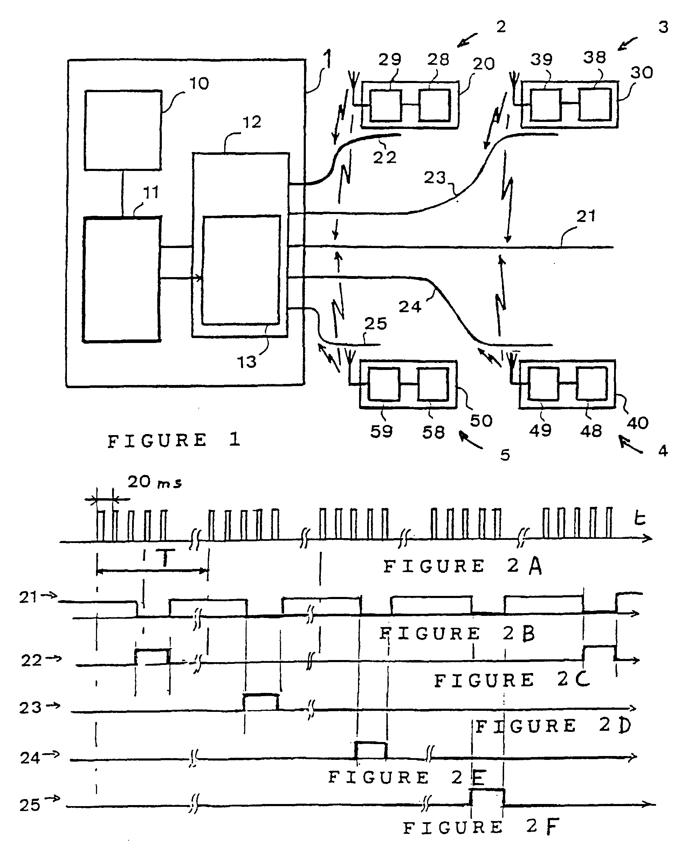

Le dispositif de contrôle de la pression des pneumatiques de la figure 1 est monté sur un véhicule automobile dont seules les quatre roues 2, 3, 4 et 5 sont représentées schématiquement. Il comporte une unité centrale 1 reliée en entrée par radio aux roues 2 à 5.

Les roues 2 à 5 comportent chacune un dispositif élémentaire de contrôle de pression de roue, respectivement référencés 20, 30, 40 et 50, comprenant chacun un émetteur radio, respectivement 29, 39, 49, 59, alimenté par pile, associé à un capteur de pression, respectivement 28, 38, 48, 58, pour transmettre des télémesures de pression à l'unité centrale 1. Celle-ci comporte à cet effet une pluralité d'antennes de réception et précisément quatre antennes élémentaires 22, 23, 24 et 25 et une antenne principale de surveillance 21.

L'unité centrale 1 comporte une base de temps 10 reliée à un microprocesseur 11 qui est lui-même relié à la sortie de circuits récepteurs radio 12 auxquels sont connectées les antennes 21 à 25. Le microprocesseur 11 commande des circuits 13 de commutation d'antenne appartenant aux circuits radio 12.

Les circuits radio récepteurs 12 forment un récepteur commun pour toutes les antennes 21 à 25, qui coopèrent avec les émetteurs respectifs 29, 39, 49, 59 des dispositifs élémentaires 20, 30, 40, 50 de contrôle des roues 2 à 5 et les antennes 22 à 25 de l'unité centrale 1 sont des antennes de réception élémentaires associées respectivement aux emplacements de roue du véhicule. Chaque antenne élémentaire 22 à 25 comporte ainsi au moins un tronçon, d'extrémité sur la figure, situé à proximité immédiate de la roue 2 à 5 associée afin de réaliser une association électromagnétique biunivoque entre l'émetteur de la roue 2 à 5 considérée et le tronçon de l'antenne 22 à 25 associée. En d'autres termes, les antennes de réception élémentaires 22 à 25 sont électromagnétiquement associées de façon biunivoque aux emplacements respectifs de roue 2 à 5 et constituent donc chacune une antenne d'acquisition sélective des télémesures du dispositif de contrôle de pression 20, 30, 40, 50 associé.

En dehors du tronçon récepteur ci-dessus, chaque antenne élémentaire comme 22 peut être blindée afin qu'elle reste insensible aux rayonnements des trois autres émetteurs 39, 49, 59 des roues 3 à 5 non associées à l'antenne 22.

Dans cet exemple, les antennes élémentaires 22 à 25, courte portée, sont des câbles rayonnants formant capteur de proximité.

Ainsi, chaque antenne élémentaire 22 à 25 transmet aux circuits récepteurs radio 12 uniquement les émissions du dispositif de contrôle 20, 30, 40, 50 de la roue 2 à 5 associée. L'unité centrale 1 identifie l'antenne élémentaire 22 à 25 alors commutée, ou scrutée, en entrée des circuits radio 12 par les circuits 13 d'après les ordres ou adresses d'aiguillage ou sélection qui ont été transmis à ces derniers par le microprocesseur 11, une table de correspondance en mémoire indiquant l'antenne élémentaire 22 à 25 concernée en fonction de l'adresse d'aiguillage. L'unité centrale 1 peut ainsi associer aux données radio reçues par les circuits 12 un emplacement déterminé de roue 2 à 5 et alors, en cas de défaut de pression, signaler la position, ou l'emplacement, de la roue 2 à 5 concernée.

L'antenne principale de surveillance 21 sert à synchroniser le séquencement du fonctionnement de l'unité centrale 1 pour l'acquisition des télémesures de pression. En effet, les circuits radio 13 ne comportent ici qu'une seule chaîne d'acquisition des télémesures radio, commune aux quatre antennes élémentaires d'acquisition 22 à 25, si bien que le microprocesseur 11 doit commander un balayage d'écoute des quatre émetteurs des roues 2 à 5 pour acquérir leurs émissions.

Ces émissions de trains de rafales interviennent avec une période de rafales T de 1 heure lorsque les roues 2 à 5 sont arrêtées ou au moins ne tournent qu'à une vitesse inférieure à un seuil bas et, sinon, toutes les six minutes lorsque le seuil est dépassé. Chaque période d'émission comporte cinq rafales identiques de bits d'informations de période élémentaire 20 millisecondes, durant chacune 8 ms et espacées de 12 ms.

La scrutation par le microprocesseur 11 est synchronisée sur les émissions des roues 2 à 5. Pour cela, l'antenne principale 21 est prévue pour détecter les émissions de toutes les roues 2 à 5 et le microprocesseur 11 commande les circuits de commutation 13 pour que, à l'état repos du dispositif de contrôle, ce soit l'antenne principale de surveillance 21 qui soit reliée à la chaîne commune de réception radio.

Ainsi, lorsque les circuits radio 12 reçoivent une première rafale, le microprocesseur 11 en est informé et cette réception commande un balayage de scrutation des antennes élémentaires d'acquisition 22 à 25, dont l'une a aussi reçu la rafale et va donc recevoir les suivantes.

Compte tenu du fait qu'il y a à chaque fois cinq rafales associées lors d'une période globale de rafales, de périodicité connue égale à 20 ms, il aurait pu être prévu de détecter la première rafale puis de commander immédiatement des scrutations successives des quatre antennes 22 à 25 pendant à chaque fois une période de 20 ms, afin de recevoir l'une des quatre rafales suivantes du train et ainsi identifier l'antenne élémentaire 22 à 25 qui reçoit le train de rafales.

Ici cependant, afin de mieux tolérer les défauts de transmission radio susceptibles de rendre inexploitables des rafales reçues, le microprocesseur 11 attend d'avoir reçu trois rafales du train de cinq rafales (fig. 2B) avant de commander la commutation de la chaîne de réception de l'antenne principale de surveillance 21 sur l'une des antennes élémentaires d'acquisition 22 à 25, par exemple l'antenne 22. Ainsi, le microprocesseur 11 commande les circuits de commutation 13 pour commuter de l'antenne de réception principale 21 sur une des antennes élémentaires de réception 22 à 25 au cours d'une même période de rafales, durant un peu moins d'une centaine de millisecondes. La figure 2A représente, en fonction du temps t, cinq trains de cinq rafales. Les figures 2B, 2C, 2D, 2E, 2F représentent des fenêtres de scrutation des antennes respectives 21, 22, 23, 24, 25, c'est-à-dire l'état de sélection d'une des antennes par la chaîne de réception radio commandée par les circuits de commutation 13.

L'état commuté correspondant sur l'antenne élémentaire 22 (fig. 2C) est maintenu pendant au moins deux périodes élémentaires (40 ms) afin de détecter les deux dernières rafales du train. Si l'une au moins de ces deux dernières rafales représente un motif de bits, éventuellement après correction par un code autocorrecteur, semblable au motif de bits de l'une au moins des trois premières rafales reçues par l'antenne de surveillance 21, la roue considérée 22 est identifiée comme étant la roue émettrice des rafales.

En variante, le microprocesseur 11 peut simplement détecter que l'antenne de surveillance 21 reçoit de l'énergie électromagnétique à un niveau dépassant un seuil déterminé. La validation de la ou des rafales reçues par les antennes 22 à 25 d'acquisition est alors indépendante de toute reconnaissance d'un motif dans les rafales reçues par l'antenne de surveillance 21.

Si l'antenne scrutée (22) ne fournit pas de signal, ou fournit un motif de bits non reconnu, le microprocesseur 11 commande les circuits de commutation 13 pour scruter une autre antenne d'acquisition, comme 23, lors d'une fenêtre temporelle (fig. 2D) centrée sur un instant futur, le plus proche possible, de réémission du train de cinq rafales, c'est-à-dire environ 6 minutes après l'instant courant. Si le véhicule est inutilisé, à l'arrêt, et que donc les roues 2 à 5 n'émettent que toutes les heures, la cartographie des positions des roues individualisées dans l'unité centrale 1 est alors ralentie, mais cela ne présente aucun inconvénient, du fait de l'immobilisation du véhicule.

Lorsque le véhicule roule, le microprocesseur 11 localise ainsi la roue émettrice 22 à 25 avec un retard de 0 (fig. 2C), 1 (fig. 2D), 2 (fig. 2E) ou 3 (fig. 2F) périodes T de 6 minutes.

Le processus se poursuit pour localiser ainsi par la suite deux autres roues 2 à 5 elles-mêmes émettrices et déduire ensuite la position de la dernière roue.

Si les dispositifs émetteurs 20, 30, 40, 50 émettent, dans les rafales, un mot de code d'identité, spécifique à chacun, l'unité centrale 1 peut établir une table de configuration des roues 2 à 5 associant chaque mot de code d'idendité à une antenne élémentaire 22 à 25 c'est-à-dire en fait à un emplacement de roue 2 à 5. Il s'agit donc d'une détermination automatique de la configuration du système de contrôle, c'est-à-dire de l'emplacement de chacun des dispositifs de roue 20, 30, 40, 50. Une fois déterminée cette configuration, l'unité centrale 1 peut utiliser uniquement l'antenne principale 21 pour surveiller les quatre roues 2 à 5, quitte à renouveler le processus de configuration lorsque le véhicule est arrêté un certain temps et que des roues 2 à 5 sont alors susceptibles d'être changées ou échangées.

En variante, on peut au contraire poursuivre de façon continue la scrutation des antennes élémentaires 22 à 25 et il est alors inutile de transmettre, dans chaque rafale, l'identité de l'émetteur, ce qui permet de raccourcir les rafales et économise d'autant les piles des émetteurs.

## Revendications

1. Système de contrôle de la pression des pneumatiques des roues (2-5) d'un véhicule comportant des dispositifs élémentaires de contrôle de roue, avec, chacun, un capteur de pression et un émetteur (20, 30, 40, 50), une unité centrale (1) avec un récepteur commun (12) et des moyens d'antenne (21-25), comprenant des antennes de réception élémentaires (22-25) associées respectivement aux emplacements de roue (2-5), agencés pour coopérer avec les émetteurs (20, 30, 40, 50) des dispositifs élémentaires de contrôle, système **caractérisé par le fait que** les moyens d'antenne de réception de l'unité centrale (1) comprennent de surcroît une antenne principale (21) de surveillance de l'ensemble des dispositifs de contrôle de pression (20, 30, 40, 50) et des moyens (13) de commutation du récepteur commun (12) de l'unité centrale (1) de l'antenne principale de surveillance (21) sur chacune des antennes élémentaires d'acquisition (22-25).

2. Système selon la revendication 1, dans lequel les antennes de réception élémentaires (22-25) sont électromagnétiquement associées de façon biunivoque aux emplacements de roue (2-5).

3. Système selon l'une des revendications 1 et 2, dans lequel, les dispositifs de contrôle de roue (20, 30, 40, 50) étant agencés pour émettre périodiquement des rafales de bits d'informations, les moyens de commutation (13) sont agencés pour commuter de l'antenne de réception principale (21) sur une antenne de réception élémentaire (22-25) au cours d'une même période de rafales.

4. Système selon l'une des revendications 1 à 3, dans lequel les antennes (22-25) sont des câbles rayonnants.

## Patentansprüche

1. System zur Kontrolle des Drucks der Reifen der Räder (2-5) eines Fahrzeugs, das Grundeinrichtungen zur Kontrolle der Räder aufweist, mit jeweils
- einem Druckmessfühler und
- einem Sender (20, 30, 40, 50),
- einer Zentraleinheit (1) mit einem gemeinsamen Empfänger (12) und
- Antennenmitteln (21-25), die Grundempfangsantennen (22-25), die den Stellen der Räder (2-5) zugeordnet sind, die dafür ausgelegt sind, mit den Sendern (20, 30, 40, 50) der Grundkontrolleinrichtungen zusammenzuwirken,
**dadurch gekennzeichnet, dass**
die Empfangsantennenmittel der Zentraleinheit (1) des Weiteren eine Hauptantenne (21) zur Überwachung der Gesamtheit der Druckkontrolleinrichtungen (20, 30, 40, 50) und Mittel (13) zur Umschaltung des gemeinsamen Empfängers (12) der Zentraleinheit (1) der Überwachunghauptantenne zur Überwachung (21) auf jede der Erfassunggrundantennen (22-25) umfasst.

2. System nach Anspruch 1,
**dadurch gekennzeichnet, dass**
die Grundempfangsantennen (22-25) elektromagnetisch in eineindeutiger Weise den Stellen der Räder (2-5) zugeordnet sind.

3. System nach einem der Ansprüche 1 und 2,
**dadurch gekennzeichnet, dass**
die Kontrolleinrichtungen der Räder (20, 30, 40, 50) ausgelegt sind, um in periodischer Weise Informationsbitketten zu senden, wobei die Mittel zur Umschaltung (13) ausgelegt sind, um im Verlauf von einer gleichen Kettenperiode von der Hauptempfangsantenne (21) auf eine Grundempfangsantenne (22-25) umzuschalten.

4. System nach einem der Ansprüche 1-3,
**dadurch gekennzeichnet, dass**
die Antennen (22-25) strahlende Kabel sind.

## Claims

1. System for checking the pressure of the tyres of the wheels (2-5) of a vehicle including individual wheel-checking devices, each with a pressure sensor and a transmitter (20, 30, 40, 50), a central unit (1) with a common receiver (12) and antenna circuits (21-25), comprising individual receiving antennae (22-25) associated respectively with the wheel locations (2-5), configured to work with the transmitters (20, 30, 40, 50) of the individual checking devices, the system being **characterized in that** the receiving-antenna means of the central unit (1) additionally comprise a main antenna (21) for monitoring all the pressure-checking devices (20, 30, 40, 50) and means (13) for switching over the common receiver (12) of the central unit (1) from the main monitoring antenna (21) onto each of the individual acquisition antennae (22-25).

2. System according to Claim 1, in which the individual receiving antennae (22-25) are electromagnetically associated, in a one-to-one way, with the respective wheel locations (2-5).

3. System according to one of Claims 1 and 2, in which, with the wheel-checking devices (20, 30, 40, 50) being configured to periodically transmit bursts of information bits, the changeover-switching means (13) are configured to switch over from the main receiving antenna (21) onto an individual receiving antenna (22-25) in the course of the same burst period.

4. System according to one of Claims 1 to 3, in which the antennae (22-25) are radiating cables.
